Europäisches Patentamt

European Patent Office

Office européen des brevets

(11) Veröffentlichungsnummer: **0 307 809**
**A1**

## (12) EUROPÄISCHE PATENTANMELDUNG

(21) Anmeldenummer: **88114742.5**

(22) Anmeldetag: **09.09.88**

(51) Int. Cl.4: **B29C 45/26 , B29C 33/38**

(30) Priorität: **18.09.87 DE 3731368**

(43) Veröffentlichungstag der Anmeldung:
**22.03.89 Patentblatt 89/12**

(84) Benannte Vertragsstaaten:
**BE CH DE FR GB LI**

(71) Anmelder: **DETEC KUNSTSTOFFTECHNIK GMBH**
**Breslauer Strasse 3**
**D-6080 Gross-Gerau(DE)**

(72) Erfinder: **Krassowski, Georg, Dr.-Ing.**
**Lichtenbergstrasse 56**
**D-6100 Darmstadt(DE)**

(74) Vertreter: **Katscher, Helmut, Dipl.-Ing.**
**Bismarckstrasse 29**
**D-6100 Darmstadt(DE)**

(54) Spritzgiesswerkzeug.

(57) Ein Spritzgießwerkzeug zur Verarbeitung von thermisch reaktiven Kunststoffen, insbesondere ein Kaltkanal-Spritzgießwerkzeug zur Verarbeitung von Silikon, weist ein Werkzeugteil (4) mit Formhohlräumen (3) und ein Angußteil (5) mit Angußkanälen (6) auf. Das Werkzeugteil (4) ist beheizt, während das Angußteil (5) gekühlt wird. An der dem Werkzeugteil (4) zugekehrten Fläche ist das Angußteil (5) mit einer Keramikplatte (13) versehen, in der mehrere Angußbohrungen (7) angeordnet sind. Die Keramikplatte (13) stellt eine Wärmeisolierschicht dar, die eine unerwünschte Wärmeabfuhr aus dem Werkzeugteil (4) in das Angußteil (5) verhindert.

EP 0 307 809 A1

## Spritzgießwerkzeug

Die Erfindung betrifft ein Spritzgießwerkzeug für Kunststoffe, mit einem Formhohlräume aufweisenden Werkzeugteil und Angußkanäle aufweisenden Angußteil, inbesondere Kaltkanal-Angußteil, und einer an der dem Werkzeugteil zugewandten Fläche des Angußteils angebrachten Isolierschicht.

Beim Spritzgießen von Kunststoffen, deren Aushärte- oder Vernetzungsverhalten temperaturabhängig ist, besteht in vielen Fällen die Notwendigkeit, das die Angußkanäle aufweisende Angußteil des Spritzgießwerkzeugs auf einer anderen Temperatur zu halten als das die Formhohlräume aufweisende Werkzeugteil. Reaktive Formmassen, wie Duroplaste und Elastomere, vernetzen beim Spritzgießvorgang durch Wärmezufuhr im beheizten Werkzeugteil. Damit die Formmasse dabei nicht auch im Angußkanal bzw. in den Angußkanälen vernetzt, wird dieses als Kaltkanal-Angußteil ausgeführt. Der Angußkanal im Angußteil wird dabei gekühlt, beispielsweise durch eine Wasserkühlung, die Kühlkanäle aufweist, die den Angußkanal umgeben.

Wenn zur gleichzeitigen Herstellung mehrerer Werkstücke mehrere Angußkanäle im engen Abstand im Angußteil angeordnet sind, ist eine gesonderte Kühlung der einzelnen Angußkanäle nicht möglich. Eine Kühlung des gesamten Angußteils könnte zu einer starken Wärmeabfuhr beim Schließen des Werkzeugs führen, so daß dann die gewünschte Vernetzung des Kunststoffs in den Formhohlräumen beeinträchtigt würde. Um dieser Wärmeabfuhr entgegenzuwirken, ist man bestrebt, die Zeit für den Spritzgießvorgang möglichst klein zu halten, da im wesentlichen nur während dieser Schließzeit eine Wärmeübertragung erfolgen kann. Außerdem wählt man die Berührungsfläche zwischen dem Angußteil und dem die Formhohlräume aufweisenden Werkzeugteil möglichst gering, um dadurch die Wärmeübertragung zu verringern. Diese letztgenannte Maßnahme ist jedoch nur begrenzt möglich, wenn in Formhohlräume gespritzt wird, die zu dem Angußteil hin offen sind, weil anschließend ein weiterer Spritzgießvorgang mit einem anderen Material erfolgt. Ein typisches Anwendungsbeispiel für diesen Arbeitsablauf ist die Herstellung von Schaltkontaktmatten, bei denen zunächst die einzelnen Kontaktkörper aus einem elektrisch leitfähigen Polymer und anschließend das die Kontaktkörper verbindende elastische Bauteil gespritzt wird.

Das Problem der unerwünschten Wärmeübertragung zwischen einem heißen und einem kalten Werkzeugteil besteht aber auch bei Heißkanal-Angußteilen, wie sie zur Verarbeitung von Thermoplasten eingesetzt werden. Hierbei ist das Angußteil beheizt, um das Formmaterial flüssig zu halten. Das die Formhohlräume aufweisende Werkzeugteil wird gekühlt, damit die dort gebildeten Formteile aushärten. Auch in diesem Fall soll eine unerwünschte Wärmeabfuhr beim schließen des Werkzeugs möglichst verhindert werden.

Bei einem bekannten Spritzgießwerkzeug (US-A-4 545 952) ist an der dem Werkzeugteil zugewandten Seite des gekühlten Angußteils eine Isolierschicht zur Wärmeisolation des Angußteils angebracht. Im Abstand vor dieser Isolierschicht befindet sich jedoch noch eine mit dem Angußteil verbundene Abschlußplatte, in der die Angußbohrungen jeweils in einer gesonderten Düse münden. Diese Abschlußplatte liegt bei geschlossenem Spritzgießwerkzeug am Werkzeugteil ohne Isolierung an und ist wie dieses beheizt und bildet somit im geschlossenen Zustand ein Teil der Werkzeugform. Die hohe Schließkraft tritt hierbei nicht an der Isolierschicht auf. Eine eng benachbarte Anordnung von Angußbohrungen ist nicht möglich.

Aufgabe der Erfindung ist es, ein Spritzgießwerkzeug der eingangs genannten Gattung so auszubilden, daß auch bei räumlich enger Anordnung mehrerer Angußkanäle eine weitestgehende thermische Trenung des Angußteils vom Werkzeugteil durch eine Isolierschicht unmittelbar in der den hohen Schließkräften ausgesetzten Trennfuge zwischen den Teilen ermöglicht wird.

Diese Aufgabe wird erfindungsgemäß dadurch gelöst, daß die Isolierschicht aus Keramikmaterial besteht.

Diese Isolierschicht aus Keramikmaterial verhindert die unerwünschte Wärmeabfuhr von der heißen in die kalte Werkzeughälfte weitgehend. Im Gegensatz zu den üblicherweise zur Wärmeisolierung verwendeten Materialien hat Keramikmaterial die Eigenschaft, daß es eine hohe Druckfestigkeit besitzt und somit geeignet ist, die verhältnismäßig hohen Flächenpressungen infolge der notwendigerweise hohen Schließkraft am Spritzgießwerkzeug aufzunehmen. Außerdem ist der Wärmeausdehnungskoeffizient des Keramikmaterials ähnlich dem des metallischen Grundwerkstoffs des Angußteils, so daß trotz der extremen Temperaturverhältnisse zusätzliche Materialspannungen vermieden werden.

Gemäß einer bevorzugten Ausführungsform der Erfindung besteht die Isolierschicht aus Zirkonoxidkeramik. Dieses Material hat die genannten Eigenschaften in besonders hohem Maße und ist durch die Kombination dieser Eigenschaften für den vorliegenden Anwendungsfall besonders geeignet.

Vorzugsweise weist die keramische Isolierschicht mehrere Angußbohrungen auf. Die Herstellung und Anbringung dieser Isolierschicht bereitet auch dann keine Schwierigkeiten, wenn die einzelnen Angußbohrungen sehr eng beieinander liegen.

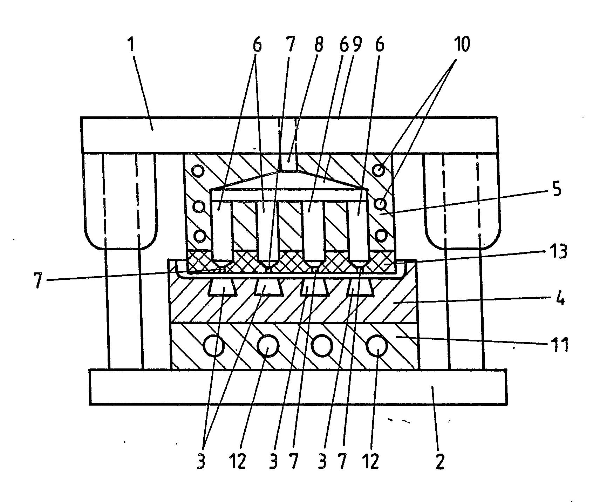

Die Erfindung wird nachfolgend an einem Ausführungsbeispiel näher erläutert, das in der Zeichnung dargestellt ist. Die Zeichnung zeigt ein Kaltkanal-Spritzgießwerkzeug in vereinfachter Darstellung im Schnitt.

Zwischen einem Oberteil 1 und einem Unterteil 2 einer (nicht dargestellten) Spritzgießmaschine sind ein Formhohlräume 3 aufweisendes Werkzeugteil 4 und ein Kaltkanal-Angußteil 5 angeordnet. Das dargestellte Spritzgießwerkzeug dient zum angußlosen Spritzgießen von Kontaktkörpern für Schaltkontaktmatten. Die in den Formhohlräumen 3 zu spritzenden Kontaktkörper bestehen aus elektrisch leitfähigem Silikon. Sie werden nach dem beschriebenen Spritzvorgang in einem zweiten Spritzvorgang mit einer gemeinsamen Membran aus elektrisch nichtleitendem Silikon verbunden.

Das Angußteil 5 weist jeweils eng benachbart mehrere parallele Angußkanäle 6 auf, deren Angußbohrungen 7 im geschlossenen Zustand des Werkzeugs jeweils in einen der Formhohlräume 3 münden. Eine gemeinsame Angußleitung 8 ist über einen Verteilerabschnitt 9 an die einzelnen Angußkanäle 6 angeschlossen und dient der Zufuhr des zu spritzenden Silikonmaterials. Im Angußteil 5 sind Kühlkanäle 10 vorgesehen, die mit einer (nicht dargestellten) Zufuhreinrichtung für Kühlwasser verbunden sind. Dadurch wird das Angußteil 5 gekühlt und auf einer Temperatur gehalten, die unterhalb der Vernetzungstemperatur des verarbeiteten Silikonmaterials liegt.

Das die Formhohlräume 3 aufweisende Werkzeugteil 4 wird durch eine darunter liegende Heizplatte 11 beheizt, in der Heizleitungen oder Heizpatronen 12 angeordnet sind. Auf diese Weise wird das Werkzeugteil 4 auf einer Temperatur gehalten, die mindestens der Vernetzungstemperatur des Silikons entspricht.

An der dem Werkzeugteil 4 zugekehrten Fläche des Angußteils 5 ist als Isolierschicht eine Keramikplatte 13 angebracht, die die Angußbohrungen 7 aufweist. Die Keramikplatte 13 dient zur Wärmeisolation zwischen dem Angußteil 5 und dem Werkzeugteil 4, so daß eine unerwünschte Wärmeabfuhr aus dem Werkzeugteil 4 in das Angußteil 5 im geschlossenen Zustand des Werkzeugs weitgehend verhindert wird.

Beim Spritzgießen von Werkstücken aus unterschiedlichen Silikonmaterialien, wie beispielsweise leitendem und nichtleitendem Silikon kommt der Haftfestigkeit an der Phasengrenze der beiden Materialien besondere Bedeutung zu. Diese Haftfestigkeit wird bei reaktionsfähigen Kunststoffen vom Vernetzungsgrad des zuerst gespritzten Materials an dieser Grenzfläche beim Kontakt mit dem noch nicht vernetzten, anschließend gespritzten Material beeinflußt.

Dieser Vernetzungsgrad an der Phasengrenze der beiden Materialien kann bei dem beschriebenen Spritzgießwerkzeug durch Variation der Werkzeug-Temperaturführung und der Werkzeug-Schließzeit so gesteuert werden, daß es beispielsweise bei der Verbindung zweier Silikone für Schaltkontaktmatten zu einer nahezu vollständigen Vernetzung über die Phasengrenze der beiden Materialien hinweg kommt. Dadurch werden an der Phasengrenze Festigkeiten erreicht, die den Festigkeiten der jeweils eingesetzten Grundmaterialien entsprechen.

Bei dem Dargestellten Ausführungsbeispiel besteht die Keramikplatte 13 aus Zirkonoxid und Magnesiumoxid. Das Keramikmaterial weist eine geringe Wärmeleitfähigkeit. und eine hohe Druckfestigkeit auf. Sein Wärmeausdehnungskoeffizient entspricht angenähert dem des metallischen Grundmaterials des Angußteils 5.

Das beschriebene Konstruktionsprinzip eines Spritzgießwerkzeugs ist nicht auf das dargestellte Ausführungsbeispiel eines Kaltkanal-Spritzgießwerkzeugs beschränkt, wie es für Elastomere und Duroplaste eingesetzt wird, sondern kann bei Spritzgießwerkzeugen für die Verarbeitung von Thermoplasten verwendet werden. Hierbei wird das Angußteil als Heißkanal-Angußteil ausgeführt und beheizt, während das die Formhohlräume 3 aufweisende Werkzeugteil 4 gekühlt wird. Auch hierbei verhindert die Keramikplatte 13 eine unerwünschte Wärmeübertragung zwischen den Werkzeugteilen.

## Ansprüche

1. Spritzgießwerkzeug für Kunststoffe, mit einem Formhohlräume (3) aufweisenden Werkzeugteil (4) und Angußkanäle (6) aufweisenden Angußteil (5), insbesondere Kaltkanal-Angußteil, und einer an der dem Werkzeugteil (4) zugewandten Fläche des Angußteils (5) angebrachten Isolierschicht, dadurch gekennzeichnet, daß die Isolierschicht (13) aus Keramikmaterial besteht.

2. Spritzgießwerkzeug nach Anspruch 1, dadurch gekennzeichnet, daß die Isolierschicht (13) aus Zirkonoxidkeramik besteht.

3. Spritzgießwerkzeug nach Anspruch 1, dadurch gekennzeichnet, daß die keramische Isolierschicht (13) mehrere Angußbohrungen aufweist.

| | EINSCHLÄGIGE DOKUMENTE | | EP 88114742.5 |

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US - A - 4 614 630 (PLUIM) <br> * Gesamt * | 1,3 | B 29 C 45/26 |
| A | | 2 | B 29 C 33/38 |
| | -- | | |
| A | AU - B - 47 710/79 (ROBLAN) <br> * Gesamt * | | |
| | -- | | |
| A | DE - B2 - 2 204 830 (DEUTSCHE SPIEGELGLAS) <br> * Gesamt * | 1 | |
| | -- | | |
| A | DE - C - 968 011 (STEINMANN) <br> * Gesamt * | 1 | |
| | ---- | | |

RECHERCHIERTE SACHGEBIETE (Int. Cl.4)

B 29 C

Der vorliegende Recherchenbericht wurde für alle Patentansprüche erstellt.

| Recherchenort | Abschlußdatum der Recherche | Prüfer |
|---|---|---|
| WIEN | 24-10-1988 | MAYER |